# EUROPÄISCHE PATENTANMELDUNG

(11) **EP 2 080 995 A1**
(43) Veröffentlichungstag der Anmeldung: **22.07.2009**
(21) Anmeldenummer: 08170812.5
(22) Anmeldetag: 05.12.2008
(51) Int. Cl.: G01F 1/58, G01F 1/86

(54) **Magnetisch-induktiver Durchflussmesser**

(30) Priorität: 05.12.2007 DE 102007058578
(71) Anmelder: Siemens Aktiengesellschaft, 80333 München (DE)
(72) Erfinder: Nielsen, Morten Storgaard, 6400 Sønderborg (DK)

(57) **Zusammenfassung**

Die Erfindung betrifft einen magnetisch-induktiven Durchflussmesser mit einem Messrohr (1), mit einer Einrichtung (5, 6) zur Erzeugung eines Magnetfelds senkrecht zur Strömungsrichtung eines Mediums im Messrohr (1) und mit mehreren Elektroden, von denen zumindest zwei Messelektroden (7, 8) im Wesentlichen senkrecht zur Strömungsrichtung und zum Magnetfeld angeordnet sind. Um neben der Durchflussgeschwindigkeit des Mediums auch den Massendurchfluss berechnen zu können, ist weiterhin zumindest ein Schallwandler (9, 10) zur Einkopplung eines akustischen Signals in das Medium und zur Detektion eines Empfangssignals vorgesehen, der vorzugsweise in einer oder den beiden Messelektroden (7, 8) angeordnet werden kann. Anhand des Empfangssignals wird in der Auswerteeinrichtung die spezifische Dichte und der Massendurchfluss berechnet. Die Erfindung hat den Vorteil, dass sich die akustische Messung der spezifischen Dichte bei geringem zusätzlichen Aufwand durch eine hohe Messgenauigkeit auszeichnet.

## Beschreibung

Die Erfindung betrifft einen magnetisch-induktiven Durchflussmesser nach dem Oberbegriff des Anspruchs 1.

Ein derartiger magnetisch-induktiver Durchflussmesser ist beispielsweise aus der WO 2006/097118 A1 bekannt.

Magnetisch-induktive Durchflussmesser nutzen das Faraday'sche Induktionsgesetz zur Bestimmung der Strömungsgeschwindigkeit eines durchströmenden Fluids. Ein magnetisches Feld wird senkrecht zu der Strömungsrichtung erzeugt. In diesem Magnetfeld erzeugen Ladungen, die mit dem Fluid transportiert werden, eine Spannung senkrecht zu dem Magnetfeld und zu der Durchflussrichtung, die mit Hilfe von Elektroden abgenommen werden kann. Die so ermittelte Messspannung ist proportional zu einer über den Strömungsquerschnitt bestimmten Strömungsgeschwindigkeit. Derartige Durchflussmesser müssen zur Gewährleistung der Messgenauigkeit unabhängig vom jeweils herrschenden Druck des durchströmenden Fluids weitgehend konstante geometrische Abmessungen beibehalten. Diese Druckfestigkeit wird häufig durch ein Messrohr aus Stahl erreicht, durch welches das Fluid strömt. Andererseits darf dieses Messrohr nicht die elektrischen und magnetischen Felder stören, welche das Fluid im Bereich eines Messabschnitts durchsetzen. Aus diesem Grund werden im Messrohr Auskleidungen oder Einsätze verwendet, die typischerweise aus Keramik oder Kunststoffmaterialien hergestellt werden. Diese erfüllen die Forderungen, elektrisch nicht leitend zu sein und das Magnetfeld kaum zu beeinflussen. Gleichzeitig schützen sie die Metallwand des Messrohrs gegen Korrosion. Dabei haben Einsätze aus einem Kunststoffmaterial den Vorteil, dass sie besonders leicht handhabbar sind.

Aus der WO 2006/002913 A2 ist ein Verfahren zur Bestimmung der Dichte und Geschwindigkeit in strömenden Medien bekannt, das auf dem magnetisch-induktiven Messprinzip beruht. Dabei wird ein Zusammenhang zwischen der Dichte und den Materialgrößen des Fluids spezifischer elektrischer Widerstand, Permeabilität, Dielektrizitätskonstante und Leitfähigkeit genutzt. Durch vergleichende Messungen der Dichte und bekannter elektrischer Materialgrößen wird ein Abhängigkeitsfeld erstellt, mit welchem die Bestimmung der Dichte ermöglicht wird. Nach Ermittlung des Abhängigkeitsfeldes kann nicht nur die spezifische Dichte des Fluids sondern auch der Massenstrom, der von der Strömungsgeschwindigkeit und der spezifischen Dichte abhängig ist, bestimmt werden. Nachteilig bei dem bekannten Verfahren ist die hohe Ungenauigkeit bei der Bestimmung der Dichte und damit auch beim Messwert des Massendurchflusses.

In der US-PS 5,033,313 ist ein Durchflussmessgerät beschrieben, das sowohl eine Vorrichtung zur magnetisch-induktiven Durchflussmessung als auch eine Vorrichtung zur Durchflussmessung auf der Basis der Trägheitskraft aufweist. Mit letzterer wird die spezifische Dichte des Mediums ermittelt, die bei der Berechnung des Massendurchflusses Berücksichtigung findet. Nachteilig bei dem bekannten Durchflussmessgerät ist jedoch der hohe Aufwand, da im Prinzip zwei Vorrichtungen zur Durchflussmessung benötigt werden.

Die DE 10 2005 025 671 B3 offenbart eine Vorrichtung zur Messung der spezifischen Dichte eines gasförmigen oder flüssigen Mediums, wobei durch einen Sendewandler ein pulsförmiges akustisches Signal in das Messmedium eingekoppelt wird, wobei das Signal nach Durchlaufen einer Messstrecke durch einen Empfangswandler detektiert wird, wobei die akustische Impedanz durch Vergleich eines aktuell gemessenen Verlaufs des Empfangssignals mit Referenzverläufen, die für verschiedene Werte der akustischen Impedanz vorbestimmt und den jeweiligen Werten der akustischen Impedanzen zugeordnet hinterlegt sind, in einer Auswerteeinrichtung automatisch ermittelt wird, wobei die Ausbreitungsgeschwindigkeit des akustischen Signals im Medium bestimmt wird und wobei die Dichte des Mediums berechnet wird als Quotient aus der akustischen Impedanz und der Ausbreitungsgeschwindigkeit. Das Verfahren hat den Vorteil, dass es eine robuste und genaue Messung der Dichte ermöglicht.

Aus der EP 0 483 491 B1 ist ein Ultraschalldichtemesser bekannt, der mit nur einem Schallwandler auskommt.

Der Erfindung liegt die Aufgabe zugrunde, einen magnetisch-induktiven Durchflussmesser zu schaffen, der neben der Messung der Durchflussgeschwindigkeit auch eine Ermittelung des Massendurchflusses ermöglicht und dabei nur einen vergleichsweise geringen zusätzlichen Aufwand gegenüber herkömmlichen magnetisch-induktiven Durchflussmessern benötigt.

Zur Lösung dieser Aufgabe weist der neue Durchflussmesser der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, dass aufgrund der Kombination des magnetisch-induktiven Messprinzips zur Ermittelung der Durchflussgeschwindigkeit und des akustischen Messprinzips zur Bestimmung der spezifischen Dichte des Mediums für die jeweilige Messaufgabe sehr genaue Prinzipien zur Anwendung kommen. Dadurch wird eine sehr genaue Bestimmung des Massendurchflusses ermöglicht, der von der Fließgeschwindigkeit des Mediums, der Geometrie des Messrohrs und der spezifischen Dichte des Mediums abhängt. Schaltungen zur Bestimmung der Dichte mit Ultraschallwandlern sind vergleichsweise einfach und wenig aufwendig und können leicht als Ergänzung an einem bestehenden magnetisch-induktiven Durchflussmesser angebracht werden.

Besonders einfach ist die Montage des Schallwandlers am Messrohr, wenn dieser in einer ohnehin vorhandenen Elektrode angeordnet ist. Dann ist keine zusätzliche Bohrung im Messrohr erforderlich und es muss lediglich anstelle einer üblichen Elektrode eine neue, die gleichzeitig den Schallwandler aufnimmt, eingesetzt werden. An einem bestehenden Messrohr sind keinerlei Änderungen erforderlich. Damit kann eine Kompatibilität mit bestehenden Produkten erreicht werden, die sich vorteilhaft auf die Herstellungskosten, die Produktflexibilität, die Komplexität des Produktprogramms und damit auch günstig auf die Logistik bei der Bereitstellung der Produkte auswirkt. Die Elektrode, in welcher der Schallwandler untergebracht ist, kann beispielsweise eine der Messelektroden oder eine Bezugspotentialelektrode sein.

Als besonders vorteilhaft erweist sich jedoch eine Ausführung, bei welcher ein erster Schallwandler in einer ersten Messelektrode und zweiter Schallwandler in einer zweiten Messelektrode angeordnet ist, welche der ersten im Messrohr diametral gegenüberliegt. Damit kann ein akustisches Verfahren zur Messung der spezifischen Dichte zum Einsatz kommen, das sich durch eine besonders hohe Genauigkeit auszeichnet, da die Laufzeit des Schalls durch das Medium in die Berechnung einbezogen werden kann. Dennoch wird der mechanische Aufwand bei der Herstellung des Durchflussmessers durch diese vorteilhafte Anordnung gegenüber einem herkömmlichen magnetisch-induktiven Durchflussmesser kaum erhöht, da lediglich die Beschaffenheit der Elektroden geändert wurde. Die zum Anschluss der Schallwandler an die Auswerteeinrichtung erforderlichen elektrischen Leitungen können gemeinsam mit den Anschlussleitungen der Elektroden verlegt werden.

Anhand der Zeichnungen, in denen ein Ausführungsbeispiel der Erfindung dargestellt ist, werden im Folgenden die Erfindung sowie Ausgestaltungen und Vorteile näher erläutert.

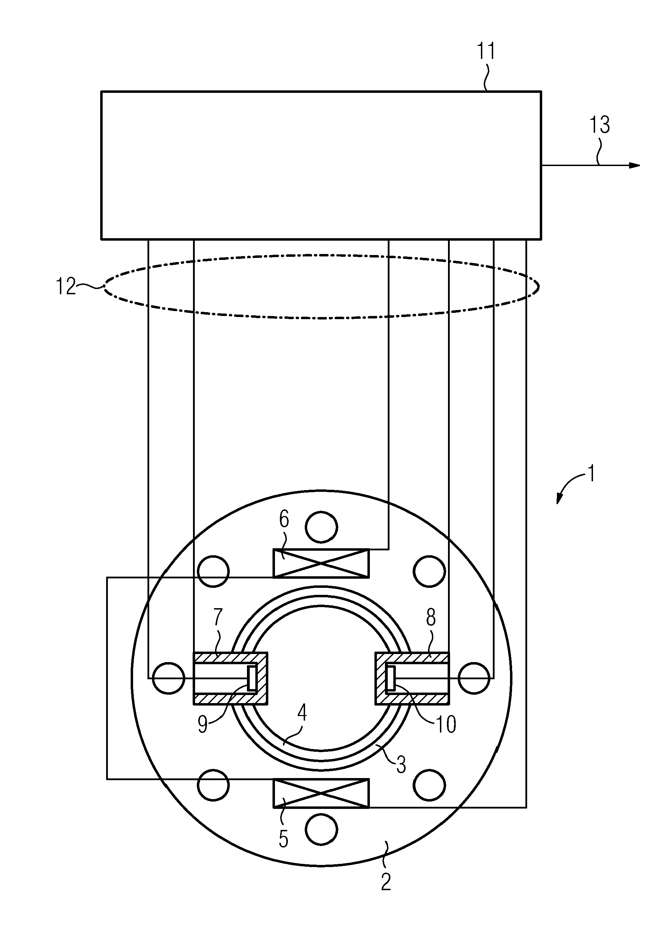

Die einzige Figur zeigt einen magnetisch-induktiven Durchflussmesser im Querschnitt.

Gemäß der Figur weist ein magnetisch-induktiver Durchflussmesser ein Messrohr 1 auf, das an seinen beiden Enden mit zwei Flanschen zum Einbau in eine Rohrleitung vorgesehen ist, von welchen in der Figur lediglich ein Flansch 2 sichtbar ist. Ein Stahlrohr 3, das mit einer elektrisch nicht leitenden Innenauskleidung 4 versehen ist, wird von einem Medium, dessen Massendurchfluss gemessen werden soll, durchflossen. Das Stahlrohr 3 trägt zwei Spulen 5 und 6, die zur Erzeugung eines Magnetfelds senkrecht zur Strömungsrichtung des Mediums im Messrohr 1 dienen. Die Spulen 5, 6 sind elektrisch in Reihe geschaltet. Weiterhin ist das Stahlrohr 3 mit Elektroden versehen, von denen in der Figur lediglich zwei Messelektroden 7 und 8 sichtbar sind, an denen bei eingeschaltetem Magnetfeld eine Messspannung abgreifbar ist, die im Wesentlichen proportional zur Magnetfeldstärke und zur Strömungsgeschwindigkeit des Mediums ist. Die Elektroden 7 und 8 sind topfförmig und dienen gleichzeitig zur Aufnahme von Schallwandlern 9 bzw. 10, die mit guter akustischer Ankopplung am Topfboden der jeweiligen Elektrode 7 bzw. 8 angebracht sind und mit deren Hilfe die spezifische Dichte des Mediums gemessen werden kann. Die genannten elektrischen bzw. elektromechanischen Komponenten 5...10 sind mit Anschlussleitungen 12 an eine Auswerteeinrichtung 11 angeschlossen, welche in bekannter Weise durch entsprechende Ansteuerung der Spulen 5, 6 und Auswertung der an den Elektroden 7, 8 abgegriffenen Spannung eine magnetisch-induktive Durchflussmessung durchführt. Ergänzt wird diese Durchflussmessung nun um eine Messung der spezifischen Dichte des Mediums, indem durch den Schallwandler 9 ein akustisches Signal in das Medium eingekoppelt und durch den Schallwandler 10 ein Empfangssignal detektiert wird. Durch Auswertung der dabei auftretenden Reflexionen, beispielsweise an der Grenzfläche zwischen Innenauskleidung 4 und Medium, der Dämpfung und/oder der Laufzeit des Schallsignals kann die spezifische Dichte des Mediums sehr genau ermittelt werden. Als ein dafür gut geeignetes Verfahren sei das aus der eingangs genannten DE 10 2005 025 671 B3 bekannte beispielhaft angeführt.

Alternativ zu dem gezeigten Ausführungsbeispiel ist es selbstverständlich auch möglich, in lediglich einer Messelektrode einen Schallwandler zur Bestimmung der spezifischen Dichte des Mediums vorzusehen, wobei diese Elektrode alternativ die Elektrode für Bezugspotential sein kann.

In der Auswerteeinrichtung 11 wird anhand der magnetischinduktiv gemessenen Durchflussgeschwindigkeit, der akustisch gemessenen spezifischen Dichte des Mediums und der bekannten Messrohrgeometrie der Massenstrom durch das Messrohr 1 berechnet und über eine Kommunikationsschnittstelle 13, insbesondere einen Feldbus, an eine übergeordnete Leitstation zur weiteren Verarbeitung in einer automatisierungstechnischen Anlage ausgegeben.

Alternativ zum beschriebenen Ausführungsbeispiel, in welchem die Auswerteeinrichtung 11 sowohl zur Bestimmung der Durchflussgeschwindigkeit als auch zur Bestimmung der spezifischen Dichte des Mediums und zum Berechnen des Massendurchflusses dient, können selbstverständlich getrennte, miteinander kommunizierende Auswerteeinrichtungen für die jeweiligen Aufgaben vorgesehen werden.

## Patentansprüche

1. Magnetisch-induktiver Durchflussmesser mit einem Messrohr (1),
mit einer Einrichtung (5, 6) zur Erzeugung eines Magnetfelds senkrecht zur Strömungsrichtung eines Mediums im Messrohr (1),
mit mehreren Elektroden, von denen zumindest zwei Messelektroden (7, 8) im Wesentlichen senkrecht zur Strömungsrichtung und zum Magnetfeld angeordnet sind,
und
mit einer Auswerteeinrichtung (11) zur Bestimmung eines Durchflussmesswerts in Abhängigkeit einer an den Messelektroden (7, 8) erfassten Spannung,
**dadurch gekennzeichnet,**
**dass** zumindest ein Schallwandler (9, 10) vorgesehen ist zur Einkopplung eines akustischen Signals in das Medium und zur Detektion eines Empfangssignals und
**dass** die Auswerteeinrichtung (11) dazu ausgebildet ist, unter Berücksichtigung des Empfangssignals einen Messwert des Massendurchflusses zu bestimmen.

2. Magnetisch-induktiver Durchflussmesser nach Anspruch 1, **dadurch gekennzeichnet, dass** der Schallwandler (9, 10) in einer Elektrode (7, 8) angeordnet ist.

3. Magnetisch-induktiver Durchflussmesser nach Anspruch 2, **dadurch gekennzeichnet, dass** ein erster Schallwandler (9) in einer ersten Messelektrode (7) und ein zweiter Schallwandler (10) in einer zweiten Messelektrode (8) angeordnet ist.
